# EUROPEAN PATENT APPLICATION

(11) **EP 4 517 913 A1**
(43) Date of publication of application: **05.03.2025**
(21) Application number: 22947668.4
(22) Date of filing: 18.10.2022
(51) Int. Cl.: H01M 10/42, H01M 10/613

(54) **ENERGY STORAGE SYSTEM CONTROL METHOD AND ENERGY STORAGE SYSTEM**

(30) Priority: 21.06.2022 WO PCT/CN2022/100146
(71) Applicant: Contemporary Amperex Technology Co., Limited, Ningde, Fujian 352100 (CN)
(72) Inventor: ZUO, Xiyang, Ningde, Fujian 352100 (CN); LI, Zhonghong, Ningde, Fujian 352100 (CN); WU, Kai, Ningde, Fujian 352100 (CN); XU, Jinmei, Ningde, Fujian 352100 (CN); LUO, Guangsheng, Ningde, Fujian 352100 (CN); ZHANG, Xuefang, Ningde, Fujian 352100 (CN)
(74) Representative: Gong, Jinping
(86) International application number: PCT/CN2022/126016
(87) International publication number: WO 2023/245931

(57) **Abstract**

Embodiments of the present application provide a control method of an energy storage system and an energy storage system. The control method includes: acquiring state information of the energy storage system; and determining operating modes of a heat management unit and a fire-fighting unit of the energy storage system according to the state information. According to the technical solutions of the present application, control strategies of the energy storage system can be reasonably adjusted to achieve effective management of the energy storage system and guarantee the security of the energy storage system.

## Description

### CROSS-REFERENCE TO RELATED APPLICATIONS

This application claims the priority to PCT Patent Application Ser. No. PCT/CN2022/100146 "Domain Controller, Energy Storage System and Control Method of Energy Storage System" filed June 21, 2022, the contents of which are incorporated herein by reference.

### TECHNICAL FIELD

The present application relates to the technical field of energy storage, in particular to a control method of an energy storage system and the energy storage system.

### BACKGROUND

Based on the national power reform and the large increase in the installed renewable energy generation capacity, the energy storage technology will play an important role in five links of power generation, transmission, transformation, distribution and utilization of a power system. A battery energy storage system is more and more widely used in new energy, smart grids, energy-saving technologies and other fields.

With the development of the energy storage industry, the properties such as the working efficiency, safety performance and cycle life of the battery energy storage system are in the spotlight. How to manage the battery energy storage system reasonably and improve the performance of the battery energy storage system is an urgent problem to be solved at present.

### SUMMARY

The present application provides a control method of an energy storage system and the energy storage system, through which control strategies of the energy storage system can be reasonably adjusted to achieve effective management of the energy storage system and guarantee the security of the energy storage system.

A first aspect provides a control method of an energy storage system. The control method includes: acquiring state information of the energy storage system; and determining operating modes of a heat management unit and a fire-fighting unit of the energy storage system according to the state information.

In the embodiment of the present application, the operating modes of the heat management unit and the fire-fighting unit of the energy storage system are determined according to the acquired state information of the energy storage unit. Compared with a solution in the prior art that a fire control system cannot determine operating modes according to state information of an energy storage unit, technical solutions provided in the present application has the advantage that the operating mode of the fire-fighting unit can be determined according to the state information of the energy storage unit, a temperature of the energy storage unit can be controlled more accurately and timely to protect the energy storage system against thermal runaway; in addition, the operating modes of the heat management unit and the fire-fighting unit are determined according to the state information of the energy storage unit, i.e., the heat management unit and the fire-fighting unit cooperate to effectively control the temperature of the energy storage unit to achieve rational control over the energy storage system, save the operating costs of the energy storage system and ensure the security of the energy storage system.

In one possible implementation, the determining the operating modes of the heat management unit and the fire-fighting unit of the energy storage system according to the state information comprises: determining the operating mode of the heat management unit according to the state information; and determining the operating mode of the fire-fighting unit according to the state information and the operating mode of the heat management unit.

The operating mode of the heat management unit is determined according to the state information of the energy storage unit, i.e., an operating state of the heat management unit is adjusted reasonably according to the state information of the energy storage unit to enable the energy storage unit to be in an appropriate operating condition and ensure efficient and safe operation of the energy storage system; besides, when the heat management unit reaches a limit of adjusting the operating condition of the energy storage unit and the energy storage unit is not yet in the appropriate operating condition and even has a risk of thermal runaway, the fire-fighting unit changes the operating mode to take part in adjusting the operating condition of the energy storage unit to protect the energy storage system against safety problems such as thermal runaway.

In one possible implementation, the state information comprises any one of temperature information, voltage, insulation resistance value, State of Charge (SOC) and State of Health (SOH) of the energy storage unit of the energy storage system.

The temperature information, the voltage, the insulation resistance value, the SOC and the SOH of the energy storage unit are all state information related to the operating state of the energy storage unit. A real-time operating condition of the energy storage unit can be learned by acquiring the state information of the energy storage unit.

In one possible implementation, the temperature information comprises a temperature rise rate of the energy storage unit. The determining the operating mode of the heat management unit according to the state information comprises: judging whether the temperature rise rate of the energy storage unit is not less than a second threshold or not in the case that the temperature rise rate of the energy storage unit is not less than a first threshold and lasts a certain period of time, the second threshold being greater than the first threshold; and determining the operating mode of the heat management unit to be a full power refrigeration mode in the case that the temperature rise rate of the energy storage unit is not less than the second threshold.

In the case that the temperature rise rate of the energy storage unit continues to rise and is not less than the second threshold after the temperature rise rate of the energy storage unit is not less than the first threshold and lasts a certain period of time, the heat management unit is determined to operate in a full power refrigeration mode to conduct cooling on the energy storage unit fully to protect the energy storage system against thermal runaway.

In one possible implementation, the first threshold is 0.01 °C/min-2 °C/min. In general, if the temperature rise rate of the energy storage unit is greater than 2 °C/min, the temperature rise rate of the energy storage unit is in a state that the temperature rises comparatively fast, so the first threshold is set to be 0.01 °C/min-2 °C/min.

In one possible implementation, the second threshold is 2 °C/min-10 °C/min. In general, if the temperature rise rate of the energy storage unit is greater than 10 °C/min, the temperature rise is abnormal, so the second threshold is set to be 2 °C/min-10 °C/min.

In one possible implementation, the determining the operating mode of the fire-fighting unit according to the state information and the operating mode of the heat management unit comprises: determining the operating mode of the fire-fighting unit to be a turn-off mode in the case that the operating mode of the heat management unit is the full power refrigeration mode and the temperature rise rate of the energy storage unit is less than a third threshold, the third threshold being greater than the second threshold.

When the temperature rise rate of the energy storage unit continues to rise but does not exceed a third threshold after the heat management unit conducts cooling on the energy storage unit in a full power refrigeration mode, the fire-fighting unit is determined to be a turn-off mode and does not take part in temperature adjustment on the energy storage unit, and the heat management unit continues to conduct cooling on the energy storage unit in the full power refrigeration mode. In this way, in the case that the heat management unit can effectively adjust the temperature of the energy storage unit, the energy storage unit can be protected against irreversible performance damage caused by unnecessarily starting the fire control system without starting the fire-fighting unit.

In one possible implementation, the determining the operating mode of the fire-fighting unit according to the state information and the operating mode of the heat management unit comprises determining the operating mode of the fire-fighting unit to be a turn-on mode in the case that the operating mode of the heat management unit to be the full power refrigeration mode and the temperature rise rate of the energy storage unit is not less than a third threshold, the third threshold being greater than the second threshold.

When the heat management unit conducts cooling on the energy storage unit in the full power refrigeration mode and the temperature rise rate of the energy storage unit continues to rise and exceeds the third threshold, i.e., when the heat management unit operates in the full power refrigeration mode and still cannot effectively control the temperature rise rate of the energy storage unit, the fire control system is determined to be in the turn-on mode and takes part in adjusting the temperature of the energy storage unit to protect the energy storage system against thermal runaway and safety problems.

In one possible implementation, the third threshold is 10 °C/min-50 °C/min. In general, if the temperature rise rate of the energy storage unit is greater than 50 °C/min, the energy storage unit has a risk of thermal runaway, so the third threshold is set to be 10 °C/min-50 °C/min.

In one possible implementation, the energy storage system further comprises a smoke sensor and/or a temperature sensor; and in the case of the smoke sensor and/or the temperature sensor is triggered, the operating mode of the fire-fighting unit is the turn-on mode.

When the temperature of the energy storage system is too high and even the energy storage unit burns to cause smog, the smoke sensor and/or the temperature sensor is triggered to trigger the fire-fighting unit to start the operating mode, lower the temperature of the energy storage system and avoid thermal control diffusion of the energy storage system.

A second aspect provides an energy storage system comprising an energy storage unit, a heat management unit, a fire-fighting unit and a control module; the control module is configured to acquire state information of the energy storage system and determine operating modes of the heat management unit and the fire-fighting unit according to the state information.

In one possible implementation, the control module is configured to: determine the operating mode of the heat management unit according to the state information of the energy storage unit; and determine the operating mode of the fire-fighting unit according to the state information of the energy storage unit and the operating mode of the heat management unit.

In one possible implementation, the state information comprises at least one of temperature information, voltage, insulation resistance value, state of charge (SOC) and state of health (SOH) of the energy storage unit of the energy storage system.

In one possible implementation, the temperature information comprises a temperature rise rate of the energy storage unit, and the control module is configured to: judge whether the temperature rise rate of the energy storage unit is not less than a second threshold or not in the case that the temperature rise rate of the energy storage unit is not less than a first threshold and lasts a certain period of time, the second threshold being greater than the first threshold; and determine the operating mode of the heat management unit to be a full power refrigeration mode in the case that the temperature rise rate of the energy storage unit is not less than the second threshold.

In one possible implementation, the first threshold is 0.01 °C/min-2 °C/min.

In one possible implementation, the second threshold is 2 °C/min-10 °C/min.

In one possible implementation, the control module is configured to determine the operating mode of the fire-fighting unit to be a turn-off mode in the case that the operating mode of the heat management unit is the full power refrigeration mode and the temperature rise rate of the energy storage unit is less than a third threshold, the third threshold being greater than the second threshold.

In one possible implementation, the control module is configured to determine the operating mode of the fire-fighting unit to be a turn-on mode in the case that the operating mode of the heat management unit is the full power refrigeration mode and the temperature rise rate of the energy storage unit is not less than a third threshold, the third threshold being greater than the second threshold.

In one possible implementation, the third threshold is 10 °C/min-50 °C/min.

In one possible implementation, the energy storage system further comprises a smoke sensor and/or a temperature sensor; and in the case of the smoke sensor and/or the temperature sensor is triggered, the operating mode of the fire-fighting unit is the turn-on mode.

A third aspect provides a control device of an energy storage system comprising a processor and a memory, the memory is used to store computer programs, and the processor is used to call the computer programs to enable the device to implement the control method in the first aspect or in any one of the possible implementations of the first aspect.

A fourth aspect provides a readable storage medium. The computer programs are stored in the readable storage medium. The computer programs are executed by a computing device so that the computing device implements the control method in the first aspect or in any one of the possible implementations of the first aspect.

The present application provides the control method of the energy storage system, which comprises determining the operating modes of the heat management unit and the fire-fighting unit of the energy storage system according to the acquired state information of the energy storage unit. Compared with the solution in the prior art that the fire control system cannot determine operating modes according to state information of an energy storage unit, the technical solutions provided in the present application has the advantage that the operating mode of the fire-fighting unit can be determined according to the state information of the energy storage unit, and the temperature of the energy storage unit can be controlled more accurately and timely to protect the energy storage system against thermal runaway; in addition, the operating modes of the heat management unit and the fire-fighting unit are determined according to the state information of the energy storage unit, i.e., the heat management unit and the fire-fighting unit cooperate to effectively control the temperature of the energy storage unit to achieve rational control over the energy storage system, save the operating costs of the energy storage system and ensure the security of the energy storage system.

### DESCRIPTION OF THE DRAWINGS

To more clearly illustrate the technical solutions of the embodiments of the present application, the accompanying drawings required by the embodiments of the present application are introduced briefly below. Apparently, the accompanying drawings depicted below are merely some examples of the present application, for those skilled in the art, they can also obtain other accompanying drawings based on the accompanying drawings without paying creative work.
FIG. 1 is a schematic diagram of an energy storage system disclosed in one embodiment of the present application;
FIG. 2 is a schematic flow chart of a control method of the energy storage system disclosed in one embodiment of the present application;
FIG. 3 is a schematic flow chart of the control method of the energy storage system disclosed in one embodiment of the present application;
FIG. 4 is a schematic flow chart of the control method of the energy storage system disclosed in one embodiment of the present application;
FIG. 5 is a schematic flow chart of the control method of the energy storage system disclosed in one embodiment of the present application;
FIG. 6 is a schematic block diagram of the energy storage system disclosed in one embodiment of the present application.
FIG. 7 is a schematic diagram of a control device of the energy storage system disclosed in one embodiment of the present application.

### DESCRIPTION OF THE EMBODIMENTS

Implementations of the present application are described in further detail below in conjunction with the accompanying drawings and embodiments. The following detailed description of the embodiments and the accompanying drawings are used to illustrate the principles of the present application but are not intended to limit the scope of the present application, i.e., the present application is not limited to the described embodiments.

In the description of the present application, it should be noted that, unless otherwise noted, "a plurality of" means two or more; and orientation or positional relationships indicated by the terms "upper", "lower", "left", "right", "inner", "outer", and the like are only for the convenience of description of the present application and simplification of description rather than indicating or implying that the referenced device or element must have a particular orientation or be constructed and operated in a particular orientation, and thus are not to be construed as limiting the present application. In addition, the terms "first", "second", "third", and the like are used for descriptive purposes only and are not to be construed as indicating or implying relative importance. "vertical" is not strictly vertical, but within the allowable range of error. "parallel" is not strictly parallel, but within the allowable range of error.

Orientation words appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it may be "fixedly connected" or "detachably connected", or "integrally connected"; and it can be "directly connected" or "indirectly connected through an intermediate medium". The specific meanings of the above terms in the present application may be understood by those of ordinary skill in the art depending on specific circumstances.

The term "and/or" in the present application is simply a description of the association relationship of the associated objects, indicating that there may be three relationships, for example, A and/or B may indicate that A exists alone, A and B exist at the same time, and B exists alone. In addition, the character "/" in the present application generally indicates an alternative relationship between the front and back associated objects.

Under the background that the installed capacity for renewable energy power generation is greatly increased based on the national power reform, the energy storage technology will play an important role in five major links of power generation, transmission, transformation, distribution and consumption of an electric power system. A battery energy storage system is used more and more widely in the fields of new energy, smart grids, energy-saving technologies, etc.

Lots of energy is stored in a confined space of the battery energy storage system with dangerous nature. However, "thermal runaway" is a root cause of causing potential safety hazards of lithium-ion batteries. Chain reactions of side reactions caused by small organic molecules lead to thermal runaway of the batteries and affect the security of the battery energy storage system. The security problems of the battery energy storage system meet a great challenge along with the development of high-energy high-density battery cells and large-capacity energy storage power stations.

Security guarantees for the battery energy storage system are mainly based on the heat management unit and the fire-fighting unit. In the prior art, the heat management unit and the fire-fighting unit often operate independently, and usually, the temperature sensor or the smoke sensor is triggered to start the operating mode of the fire-fighting unit. The battery energy storage system includes a plurality of batteries, and the temperature sensor or the smoke sensor can be triggered just when the overall temperature of the energy storage system reaches a certain value or the smoke concentration of the energy storage system reaches a certain value. As a result, when thermal runaway occurs to an individual battery in the energy storage system far away from the temperature sensor or the smoke sensor, the temperature sensor or the smoke sensor will not be triggered, and the fire control system will not start, which leads to thermal runaway of the energy storage system.

In view of this, the present application provides the control method of the energy storage system, which includes determining the operating modes of the heat management unit and the fire-fighting unit of the energy storage system according to the acquired state information of the energy storage unit. According to the technical solutions provided in the present application, the operating mode of the fire-fighting unit can be determined according to the state information of the energy storage unit, and the temperature of the energy storage unit can be controlled more accurately and timely to protect the energy storage system against thermal runaway; in addition, the operating modes of the heat management unit and the fire-fighting unit are determined according to the state information of the energy storage unit, i.e., the heat management unit and the fire-fighting unit cooperate to effectively control the temperature of the energy storage unit to achieve rational control over the energy storage system, save the operating costs of the energy storage system and ensure the security of the energy storage system.

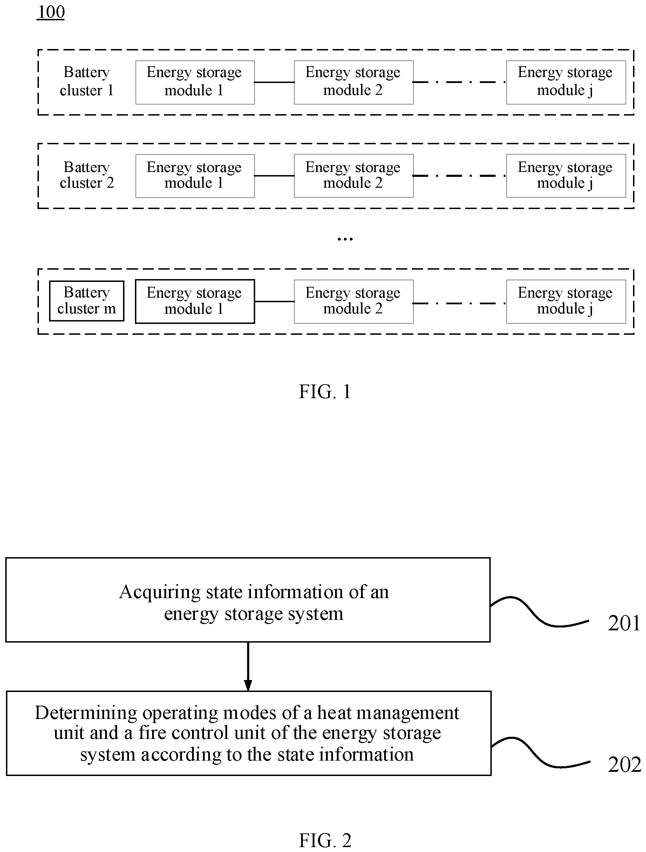

FIG. 1 is a schematic diagram of an energy storage system 100 provided in the present application.

The energy storage system 100 includes a plurality of battery clusters, namely the battery cluster 1 to the battery cluster m shown in FIG. 1, wherein m may be a natural number greater than 1, i.e., the number of the battery clusters can be flexibly adjusted according to the energy storage capacity in practical application; if the energy storage capacity is large, the number of the battery clusters can be set properly to be larger; and if the energy storage capacity is small, the number of the battery clusters can be reduced properly.

Each battery cluster includes at least two battery energy storage systems (ESS) connected in series, namely ESS1 to ESS j shown in FIG. 1, wherein j may be a natural number greater than or equal to 2. Each ESS includes a plurality of energy storage elements connected in series or in parallel to form a minimum energy storage and management unit. To achieve detection and control of the energy storage system, a battery management system (BMS) will be designed in each of the energy storage systems and the battery clusters to monitor battery information of a battery such as the SOC, temperature and current and perform real-time information exchange with an upper energy management system (EMS) or a power convert system (PCS) to manage and control the whole battery energy storage system.

FIG. 2 is a schematic flow chart of the control method of the energy storage system disclosed in one embodiment of the present application. The energy storage system may be the energy storage system 100 shown in FIG. 1.

201. Acquire state information of the energy storage system.

202. Determine operating modes of a heat management unit and a fire-fighting unit of the energy storage system according to the state information.

The heat management unit of the energy storage system can conduct heat management on the energy storage unit of the energy storage system, for example, conducts cooling on the energy storage unit when the temperature of the energy storage unit is too high and conducts heating on the energy storage unit when the energy storage unit needs to be heated. The heat management unit may include a water chilling unit and can control the water chilling unit to be in a refrigeration mode to conduct cooling on the energy storage unit and control the water chilling unit to be in a heating mode to conduct heating on the energy storage unit.

The fire-fighting unit of the energy storage system can conduct cooling on the energy storage system when the temperature of the energy storage system is too high.

In the embodiment of the present application, the operating modes of the heat management unit and the fire-fighting unit of the energy storage system are determined according to the acquired state information of the energy storage unit. Compared with the solution in the prior art that the fire control system cannot determine operating modes according to the state information of the energy storage unit, the technical solutions provided in the present application has the advantage that the operating mode of the fire-fighting unit can be determined according to the state information of the energy storage unit, and the temperature of the energy storage unit can be controlled more accurately and timely to protect the energy storage system against thermal runaway; in addition, the operating modes of the heat management unit and the fire-fighting unit are determined according to the state information of the energy storage unit, i.e., the heat management unit and the fire-fighting unit cooperate to effectively control the temperature of the energy storage unit to achieve rational control over the energy storage system, save the operating costs of the energy storage system and ensure the security of the energy storage system.

Optionally, in the embodiment of the present application, the state information of the energy storage system includes at least one of temperature information, voltage, insulation resistance value, state of charge (SOC) and state of health (SOH) of the energy storage unit of the energy storage system.

The temperature of a battery is a key factor influencing aging of the battery. A proper operating temperature can slow the aging of the battery and meanwhile present optimal performance of the battery. Thus, the temperature of the battery needs to be monitored in real time to make sure that the battery maintains the proper operating temperature by adjusting the operating mode of the heat management unit. When the temperature of the battery rises abnormally, the temperature of the battery can be lowered through the fire control system.

Insulation resistance of the battery refers to a thermistor with a negative temperature coefficient, of which resistance decreases as temperature rises in an exponential relationship. A resistance value of the thermistor decreases as the temperature rises.

The state of charge (SOC) of a battery is a physical quantity configured to reflect the remaining capacity of the battery, which represents the ratio of the remaining capacity of the battery after being used for a period of time or not being used for a long time to the capacity in the fully charged state.

The state of health (SOH) of the battery is a quality factor of the battery compared with its ideal state. Usually, the state of health (SOH) of the battery decreases with the increase of service time and usage counts. Usually, the state of health (SOH) of the battery is determined through the variation of electrical parameters such as internal resistance, capacity, voltage, self-discharge speed, charging ability and number of charge and discharge cycles.

It should be understood that the state information described above is merely an illustrative example without any limitation to the present application. The state information in the embodiment of the present application may include any one of the state information described above but is not limited to the above state information.

The temperature information, the voltage, the insulation resistance value, the SOC and the SOH of the energy storage unit are all state information related to the operating state of the energy storage unit. A real-time operating condition of the energy storage unit can be learned by acquiring the state information of the energy storage unit.

The following description takes "determining the operating modes of the heat management unit and the fire-fighting unit of the energy storage system according to the temperature information of the energy storage unit" as an example to illustrate the control method of the energy storage system in the present application.

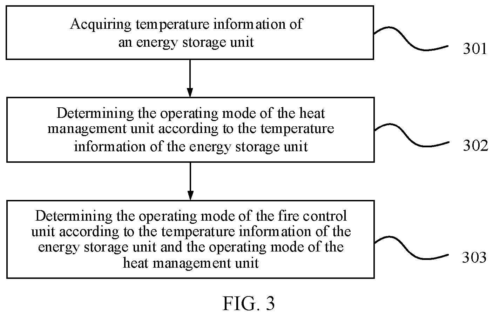

FIG. 3 is a schematic flow chart of the control method of the energy storage system disclosed in another embodiment of the present application.

301. Acquire temperature information of an energy storage unit.

The temperature information of the energy storage unit can be acquired through the temperature sensor, and the temperature sensor can be integrated with the battery management system BMS, which is not limited in the present application.

302. Determine the operating mode of the heat management unit according to the temperature information of the energy storage unit.

303. Determine the operating mode of the fire-fighting unit according to the temperature information of the energy storage unit and the operating mode of the heat management unit.

The operating mode of the heat management unit is determined according to the temperature information of the energy storage unit, i.e., the operating state of the heat management unit is adjusted reasonably according to the temperature information of the energy storage unit to enable the energy storage unit to be in an appropriate operating condition and ensure efficient and safe operation of the energy storage system; besides, when the heat management unit reaches a limit of adjusting the operating condition of the energy storage unit and the energy storage unit is not yet in the appropriate operating condition and even has a risk of thermal runaway, the fire-fighting unit changes the operating mode to take part in adjusting the operating condition of the energy storage unit to protect the energy storage system against safety problems such as thermal runaway.

Optionally, in the embodiment of the present application, the temperature information includes the temperature rise rate of the energy storage unit.

The temperature rise rate of the energy storage unit is the state information reflecting temperature variations of the energy storage unit in an operating state. Whether the energy storage unit has a risk of thermal runaway or not can be judged according to the temperature rise rate of the energy storage unit, the operating state of a non-energy-storage unit is adjusted accordingly, and safe operation of the energy storage system is guaranteed.

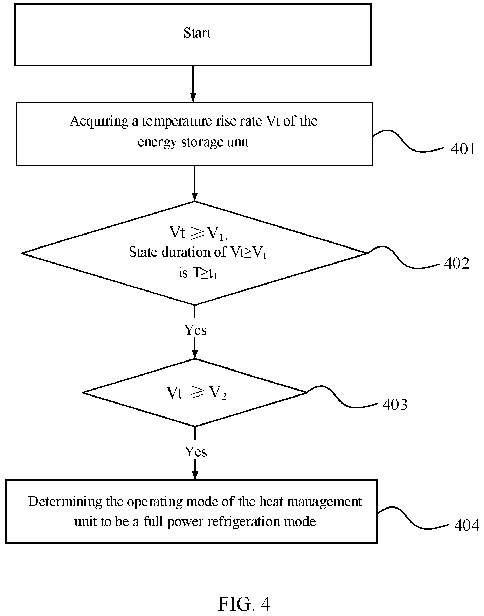

FIG. 4 is a schematic flow chart of the control method of the energy storage system disclosed in another embodiment of the present application.

401. Acquire a temperature rise rate Vt of the energy storage unit.

402. Judge whether the temperature rise rate Vt of the energy storage unit is not less than a first threshold V₁ or not and whether a station duration T is not less than t₁ or not.

403. Judge the temperature rise rate Vt of the energy storage unit is not less than a second threshold V₂ or not in the case that the temperature rise rate Vt of the energy storage unit is not less than the first threshold V₁ and the duration T is not less than t₁.

404. Determine the operating mode of the heat management unit to be a full power refrigeration mode in the case that the temperature rise rate of the energy storage unit is not less than the second threshold V₂.

In the case that the temperature rise rate of the energy storage unit continues to rise and is not less than the second threshold V₂ after the temperature rise rate of the energy storage unit is not less than the first threshold V₁ and lasts a certain period of time, the heat management unit is determined to operate in a full power refrigeration mode to conduct cooling on the energy storage unit fully to protect the energy storage system against thermal runaway.

Optionally, in the embodiment of the present application, the first threshold V₁ is 0.01 °C/min-2 °C/min, the state duration T when the temperature rise rate Vt of the energy storage unit is not less than the first threshold V₁ is not less than 10 s-300 s; and the second threshold V₂ is 2 °C/min-10 °C/min.

In general, if the temperature rise rate of the energy storage unit is greater than 2 °C/min, the temperature rise rate of the energy storage unit is in the state that the temperature rises comparatively fast, so the first threshold V₁ is set to be 0.01 °C/min-2 °C/min. If the temperature rise rate of the energy storage unit is greater than 10 °C/min, the temperature rise is abnormal, so the second threshold V₂ is set to be 2 °C/min-10 °C/min.

It should be understood that the above-mentioned numerical ranges are only to illustrate the embodiment of the present application without any restriction to the present application, and actual parameters can be adjusted and set according to an actual operating state of the energy storage system.

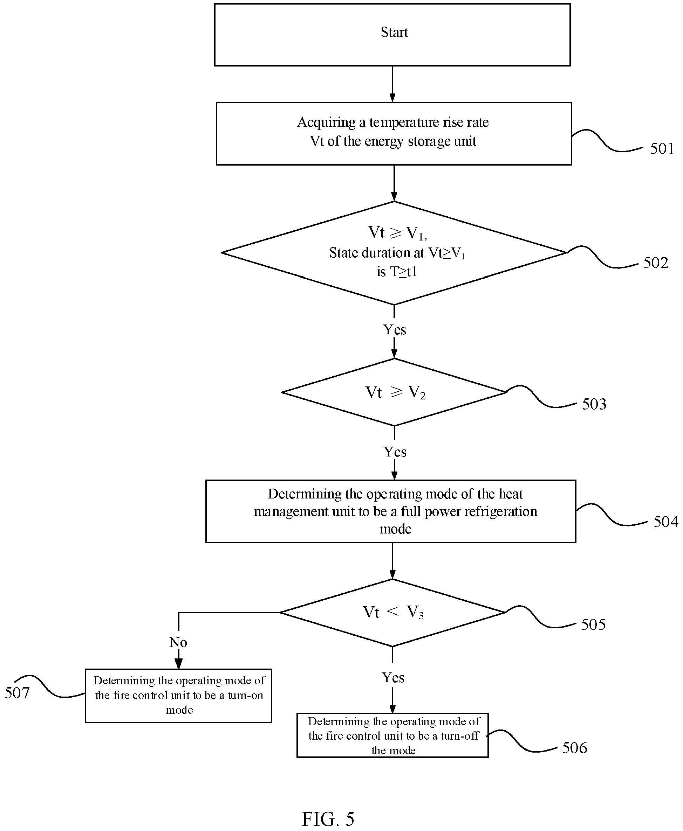

FIG. 5 is a schematic flow chart of the control method of the energy storage system disclosed in another embodiment of the present application. 501-504 in FIG. 5 are similar to 401-404 in the foregoing embodiment and may refer to the foregoing embodiment, for brevity, which is not described again here.

505. Judge whether the temperature rise rate Vt of the energy storage unit is less than a third threshold V₃ or not.

506. Determine the operating mode of the fire-fighting unit to be a turn-off mode in the case that the operating mode of the heat management unit is the full power refrigeration mode and the temperature rise rate of the energy storage unit is less than a third threshold V₃.

When the temperature rise rate of the energy storage unit continues to rise but does not exceed the third threshold V₃ after the heat management unit conducts cooling on the energy storage unit in the full power refrigeration mode, the fire-fighting unit is determined to be a turn-off mode and does not take part in temperature adjustment on the energy storage unit, and the heat management unit continues to conduct cooling on the energy storage unit in the full power refrigeration mode. In this way, in the case that the heat management unit can effectively adjust the temperature of the energy storage unit, the energy storage unit can be protected against irreversible performance damage caused by unnecessarily starting the fire control system without starting the fire-fighting unit.

507. Determine the operating mode of the fire-fighting unit to be a turn-on mode in the case that the operating mode of the heat management unit is the full power refrigeration mode and the temperature rise rate of the energy storage unit is not less than the third threshold V₃.

When the heat management unit conducts cooling on the energy storage unit in the full power refrigeration mode and the temperature rise rate of the energy storage unit continues to rise and exceeds the third threshold V₃, i.e., when the heat management unit operates in the full power refrigeration mode and still cannot effectively control the temperature rise rate of the energy storage unit, the fire control system is determined to be in a turn-on mode and takes part in adjusting the temperature of the energy storage unit to protect the energy storage system against thermal runaway and safety problems.

Optionally, in the embodiment of the present application, the third threshold V₃ may be 10 °C/min-50 °C/min.

In general, if the temperature rise rate of the energy storage unit is greater than 50 °C/min, the energy storage unit has a risk of thermal runaway, so the third threshold V₃ is set to be 10 °C/min-50 °C/min.

It should be understood that the above-mentioned numerical ranges are only to illustrate the embodiment of the present application without any restriction to the present application, and the actual parameters can be adjusted and set according to the actual operating state of the energy storage system.

Optionally, in the embodiment of the present application, the energy storage system further includes a smoke sensor and/or a temperature sensor; and when the smoke sensor and/or the temperature sensor is triggered, the operating mode of the fire-fighting unit is the turn-on mode.

When the temperature of the energy storage system is too high and even the energy storage unit burns to cause smog, the smoke sensor and/or the temperature sensor is triggered to trigger the fire-fighting unit to start the operating mode, lower the temperature of the energy storage system and avoid thermal control diffusion of the energy storage system.

The control method for adjusting the temperature of the energy storage system through the cooperation of the heat management unit and the fire-fighting unit is described above. It should be understood that the control method of the energy storage system described above is not only limited to the heat management unit and the fire-fighting unit, for example when the energy storage system is provided with an alarm unit, but also the heat management unit and the alarm unit in cooperation with each other. Specifically, when the temperature rise rate of the energy storage unit is not less than the above-mentioned third threshold V₃, the alarm unit starts to inform the battery management system BMS, and the BMS indicates other units with a cooling function to conduct cooling on the energy storage system. The above description is only to illustrate the control method for adjusting the energy storage system through cooperation between a plurality of units of the energy storage system without any restriction to the present application.

The control method of the energy storage system in the embodiment of the present application is described above, and the energy storage system in the embodiment of the present application is described below, where parts that are not described in detail may refer to the foregoing embodiments.

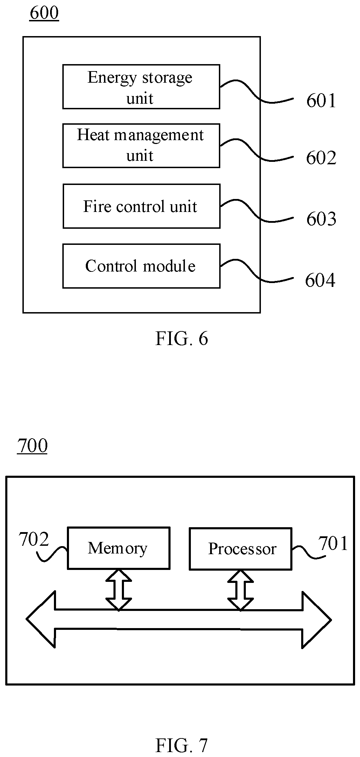

FIG. 6 is a schematic diagram of an energy storage system 600 disclosed in one embodiment of the embodiment of the present application. In the embodiment of the present application, the energy storage system 600 includes an energy storage unit 601, a heat management unit 602, a fire-fighting unit 603 and a control module 604.

The control module 604 is configured to acquire state information of the energy storage system 600 and determine operating modes of the heat management unit 602 and the fire-fighting unit 603 according to the state information.

In the embodiment of the present application, the operating modes of the heat management unit 602 and the fire-fighting unit 603 of the energy storage system 600 are determined according to the acquired state information of the energy storage unit 601. According to the technical solutions provided in the present application, the operating mode of the fire-fighting unit 603 can be determined according to the state information of the energy storage unit 601, and the temperature of the energy storage unit 601 can be controlled more accurately and timely to protect the energy storage system 600 against thermal runaway; in addition, the operating modes of the heat management unit 602 and the fire-fighting unit 603 are determined according to the state information of the energy storage unit 601, i.e., the heat management unit 602 and the fire-fighting unit 603 cooperate to effectively control the temperature of the energy storage unit 601 to achieve rational control over the energy storage system 600, save the operating costs of the energy storage system 600 and ensure the security of the energy storage system 600.

Optionally, in the embodiment of the present application, the control module 604 is configured to determine the operating mode of the heat management unit 602 according to the state information of the energy storage unit 601 and determine the operating mode of the fire-fighting unit 603 according to the state information of the energy storage unit 601 and the operating mode of the heat management unit 602.

Optionally, in the embodiment of the present application, the state information of the energy storage system 600 includes at least one of temperature information, voltage, insulation resistance value, state of charge SOC and state of health SOH of the energy storage unit 601 of the energy storage system 600.

Optionally, in the embodiment of the present application, the temperature information includes a temperature rise rate of the energy storage unit 601. The control module 604 is configured to: judge whether the temperature rise rate of the energy storage unit 601 is not less than the second threshold or not in the case that the temperature rise rate of the energy storage unit 601 is not less than the first threshold and lasts a certain period of time, the second threshold being greater than the first threshold; and determine the operating mode of the heat management unit 602 to be a full power refrigeration mode in the case that the temperature rise rate of the energy storage unit 601 is not less than the second threshold.

Optionally, in the embodiment of the present application, the first threshold is 0.01 °C/min-2 °C/min, and the state duration when the temperature rise rate of the energy storage unit 601 is not less than the first threshold may be 10 s-300 s.

Optionally, in the embodiment of the present application, the second threshold is 2 °C/min-10 °C/min.

Optionally, in the embodiment of the present application, the control module 604 is configured to determine the operating mode of the fire-fighting unit 603 to be a turn-off mode in the case that the operating mode of the heat management unit 602 is a full power refrigeration mode and the temperature rise rate of the energy storage unit 601 is less than a third threshold, the third threshold being greater than the second threshold.

Optionally, in the embodiment of the present application, the control module 604 is configured to determine the operating mode of the fire-fighting unit 603 to be a turn-on mode in the case that the operating mode of the heat management unit 602 is the full power refrigeration mode and the temperature rise rate of the energy storage unit 601 is not less than the third threshold, the third threshold being greater than the second threshold.

Optionally, in the embodiment of the present application, the third threshold is 10 °C/min-50 °C/min.

Optionally, in the embodiment of the present application, the energy storage system further includes a smoke sensor and/or a temperature sensor; and when the smoke sensor and/or the temperature sensor is triggered, the operating mode of the fire-fighting unit 603 is the turn-on mode.

The embodiment of the present application further provides a control device 700 of the energy storage system. As shown in FIG. 7, the control device 700 includes a processor 701 and a memory 702, wherein the memory 702 is used to store computer programs, and the processor 701 is used to call the computer programs to enable the control device 700 to implement the aforementioned control methods in the embodiments of the present application.

The embodiment of the present application further provides a readable storage medium for storing the computer programs, and the computer programs are performed by the computing device so that the computing device implements the aforementioned control methods in the embodiments of the present application.

Although the present application has been described with reference to preferred embodiments, various improvements can be made thereto and equivalents can be used for the replacement of members therein without departing from the scope of the present application. Most of all, on the premise of no structural conflict, the technical features mentioned in the embodiments can be combined in any way. The present application is not restricted to particular embodiments disclosed herein but comprises all technical solutions falling in the scope of the claims.

## Claims

1. A control method of an energy storage system, comprising:
acquiring state information of the energy storage system; and
determining operating modes of a heat management unit and a fire-fighting unit of the energy storage system according to the state information.

2. The control method according to claim 1, wherein the determining operating modes of a heat management unit and a fire-fighting unit of the energy storage system according to the state information comprises:
determining the operating mode of the heat management unit according to the state information; and
determining the operating mode of the fire-fighting unit according to the state information and the operating mode of the heat management unit.

3. The control method according to claim 1 or claim 2, wherein the state information comprises at least one of temperature information, voltage, insulation resistance value, state of charge (SOC) and state of health (SOH) of an energy storage unit of the energy storage system.

4. The control method according to claim 3, wherein the temperature information comprises a temperature rise rate of the energy storage unit, and the determining the operating mode of the heat management unit according to the state information comprises:
judging whether the temperature rise rate of the energy storage unit is not less than a second threshold or not in the case that the temperature rise rate of the energy storage unit is not less than a first threshold and lasts a certain period of time, the second threshold being greater than the first threshold; and
determining the operating mode of the heat management unit to be a full power refrigeration mode in the case that the temperature rise rate of the energy storage unit is not less than the second threshold.

5. The control method according to claim 4, wherein the first threshold is 0.01 °C/min-2 °C/min.

6. The control method according to claim 4 or claim 5, wherein the second threshold is 2 °C/min-10 °C/min.

7. The control method according to any one of claims 4 to 6, wherein the determining the operating mode of the fire-fighting unit according to the state information and the operating mode of the heat management unit comprises:
determining the operating mode of the fire-fighting unit to be a turn-off mode in the case that the operating mode of the heat management unit is the full power refrigeration mode and the temperature rise rate of the energy storage unit is less than a third threshold, the third threshold being greater than the second threshold.

8. The control method according to any one of claims 4 to 7, wherein the determining the operating mode of the fire-fighting unit according to the state information and the operating mode of the heat management unit comprises:
determining the operating mode of the fire-fighting unit to be a turn-on mode in the case that the operating mode of the heat management unit is the full power refrigeration mode and the temperature rise rate of the energy storage unit is not less than a third threshold, the third threshold being greater than the second threshold.

9. The control method according to claim 7 or claim 8, wherein the third threshold is 10 °C/min-50 °C/min.

10. The control method according to claim 1, wherein the energy storage system further comprises a smoke sensor and/or a temperature sensor; and
in the case that the smoke sensor and/or the temperature sensor is triggered, the operating mode of the fire-fighting unit is the turn-on mode.

11. An energy storage system, comprising:
an energy storage unit;
a heat management unit;
a fire-fighting unit; and
a control module, wherein the control module is configured to acquire state information of the energy storage system and determine operating modes of the heat management unit and the fire-fighting unit according to the state information.

12. The energy storage system according to claim 11, wherein the control module is configured to:
determine the operating mode of the heat management unit according to the state information; and
determine the operating mode of the fire-fighting unit according to the state information and the operating mode of the heat management unit.

13. The energy storage system according to claim 11 or claim 12, wherein the state information comprises at least one of temperature information, voltage, insulation resistance value, state of charge (SOC) and state of health (SOH) of the energy storage unit of the energy storage system.

14. The control method according to claim 13, wherein the temperature information comprises a temperature rise rate of the energy storage unit, and the control module is configured to:
judge whether the temperature rise rate of the energy storage unit is not less than a second threshold or not in the case that the temperature rise rate of the energy storage unit is not less than a first threshold and lasts a certain period of time, the second threshold being greater than the first threshold; and
determine the operating mode of the heat management unit to be a full power refrigeration mode in the case that the temperature rise rate of the energy storage unit is not less than the second threshold.

15. The energy storage system according to claim 14, wherein the first threshold is 0.01 °C/min-2 °C/min.

16. The energy storage system according to claim 14 or claim 15, wherein the second threshold is 2 °C/min-10 °C/min.

17. The energy storage system according to any one of claims 14 to 16, wherein the control module is configured to:
determine the operating mode of the fire-fighting unit to be a turn-off mode in the case that the operating mode of the heat management unit is the full power refrigeration mode and the temperature rise rate of the energy storage unit is less than a third threshold, the third threshold being greater than the second threshold.

18. The energy storage system according to any one of claims 14 to 17, wherein the control module is configured to:
determine the operating mode of the fire-fighting unit to be a turn-on mode in the case that the operating mode of the heat management unit is the full power refrigeration mode and the temperature rise rate of the energy storage unit is not less than a third threshold, the third threshold being greater than the second threshold.

19. The energy storage system according to claim 17 or claim 18, wherein the third threshold is 10 °C/min-50 °C/min.

20. The energy storage system according to claim 11, further comprising a smoke sensor and/or a temperature sensor; and
in the case that the smoke sensor and/or the temperature sensor is triggered, the operating mode of the fire-fighting unit being the turn-on mode.
